Europäisches Patentamt

(19) European Patent Office

Office européen des brevets

(11) Publication number: **0 294 168 B1**

(12) **EUROPEAN PATENT SPECIFICATION**

(45) Date of publication of patent specification :
13.11.91 Bulletin 91/46

(51) Int. Cl.⁵ : **C08F 10/02, C08F 4/64**

(21) Application number : **88304983.5**

(22) Date of filing : **01.06.88**

(54) **Method for producing an ethylene-based polymer.**

(30) Priority : **02.06.87 JP 137712/87**

(43) Date of publication of application :
**07.12.88 Bulletin 88/49**

(45) Publication of the grant of the patent :
**13.11.91 Bulletin 91/46**

(84) Designated Contracting States :
**BE CH DE FR GB IT LI NL SE**

(56) References cited :
**EP-A- 0 043 473**
**FR-A- 2 307 824**

(73) Proprietor : **IDEMITSU PETROCHEMICAL CO. LTD.**
**1-1, Marunouchi 3-chome Chiyoda-ku Tokyo 100 (JP)**

(72) Inventor : **Nakacho, Kenji**
**2124 Anegasaki**
**Ichigara-shi Chiba-ken (JP)**
Inventor : **Tomotsu, Norio**
**2-4-2, Yushudainishi**
**Ichihara-shi Chiba-ken (JP)**

(74) Representative : **Baverstock, Michael George Douglas et al**
**BOULT, WADE & TENNANT 27 Furnival Street London, EC4A 1PQ (GB)**

## Description

The present invention relates to a method for producing an ethylene-based polymer. More particularly, the invention relates to a method for producing an ethylene-based polymer having properties suitable for use as a material of blow-molded articles and films by polymerizing ethylene or a monomer mixture mainly composed of ethylene in the presence of a highly active Ziegler-type catalyst system prepared in a specific procedure.

It is well known that polyolefins can be produced by polymerizing olefins by use of a solid catalyst system composed of a reaction product of an organic magnesium compound, organic titanium compound, zirconium compound and aluminum halide and an organometallic compound (see, for example, Japanese Patent Publication 55-8083 and Japanese Patent Kokai 56-151704 and 52-39714). Prior art methods using various catalyst systems including the above described one cannot fully comply with recently increasing demands and requirements in the polyolefin industry not only for the improvement in the yield of the polymer from the monomer but also for upgrading of the properties of the polymer products to meet the particular application of the polymer product.

The present invention accordingly has an object to provide a novel method for producing an ethylene-based polymer by use of a specifically prepared catalyst system having a greatly enhanced catalytic activity over conventional catalyst systems, in which the molecular weight distribution of the polymer product can be controlled in a wide range to satisfy the particular requirements for the properties of the polymer in accordance with the intended application thereof. Namely, the most characteristic feature of the inventive method consists in the specific procedure for the preparation of the catalyst system which belongs to a type of so-called Ziegler catalysts. By virtue of the use of the specifically prepared catalyst system, ethylene or a monomer mixture mainly composed of ethylene can be polymerized with a high activity of the catalyst system to give a polymer product having a well controlled molecular weight distribution.

EP-A-43473 describes a process for producing polyethylene using a catalyst comprising an organoaluminium compound and a solid product prepared by reacting the reaction product of a compound containing titanium, magnesium and halogen, and at least one compound selected from tetraalkoxyzirconium, zirconium tetrahalide and tetraalkoxytitanium with an organoaluminium halide. It should be noted however that this Patent does not teach that a magnesium-containing solid complex should first be formed, by contacting a mixture of a magnesium dialkoxide and a titanium or zirconium tetraalkoxide with an alcohol.

The method of the present invention for producing an ethylene-based polymer comprises polymerizing ethylene or a monomer mixture mainly composed of ethylene in the presence of a catalyst system comprising:

(A) a first catalytic ingredient which is a solid prepared in a process comprising the steps of

(a) contacting a mixture composed of a magnesium dialkoxide represented by the general formula $Mg(OR^1)_2$, in which $R^1$ is a monovalent hydrocarbon group, and a tetraalkoxide of a metal represented by the general formula $M^1(OR^2)_4$, in which $M^1$ is an atom of titanium or zirconium and $R^2$ is a monovalent hydrocarbon group, with an alkanol represented by the general formula $R^3OH$, in which $R^3$ is an alkyl group, to form a magnesium-containing solid complex,

(b) reacting the magnesium-containing solid complex with a tetraalkoxide of a metal represented by the general formula $M^2(OR^4)_4$, tetrahalide of a metal represented by the general formula $M^2X^1_4$ or a mixture thereof, in which $M^2$ is an atom of zirconium, when $M^1$ is a titanium atom, or an atom of titanium, when $M^1$ is a zirconium atom, $R^4$ is a monovalent hydrocarbon group and $X^1$ is a halogen atom, and optionally with an alkoxide of the formula $M^1(OR^2)_4$ when $M^1$ is a titanium atom, and

(c) reacting the reaction product obtained in step (b) above with an organoaluminium halide represented by the general formula $AlR^5X_{3-n}$, in which $R^5$ is an alkyl group, $X^2$ is a halogen atom and n is 1 or 2 and

(B) an organoaluminium compound as the second catalytic ingredient.

## DETAILED DESCRIPTION OF THE PREFERRED EMBODIMENTS

As is understood from the above given description, the most important feature of the inventive method consists in the process for the preparation of the catalyst system or, in particular, the solid catalytic ingredient, i.e. catalytic ingredient (A), as one of the constituents of the catalyst system. The first step, i.e. step (a), in the process for the preparation of the catalytic ingredient (A) is performed by bringing a mixture of a magnesium dialkoxide of the general formula $Mg(OR^1)_2$ and a tetraalkoxide of titanium or zirconium of the general formula $M^1(OR^2)_4$ into contact with an alkanol of the general formula $R^3OH$ to prepare a magnesium-containing solid

2

complex.

The monovalent hydrocarbon group denoted by $R^1$ in the general formula representing the magnesium alkoxide has 1 to 20 carbon atoms or, preferably, 1 to 8 carbon atoms and may be aliphatic, alicyclic or aromatic. Examples of suitable magnesium dialkoxide include magnesium dimethoxide, magnesium diethoxide, magnesium dipropoxide, magnesium diisopropoxide, magnesium diallyloxide, magnesium di-n-butoxide, magnesium di-sec-butoxide, magnesium diisobutoxide, magnesium di-tert-butoxide, magnesium dibutenoxide, magnesium dipentoxide, magnesium dioctoxide, magnesium dicyclopentoxide, magnesium diphenoxide, magnesium dibenzyloxide, magnesium methoxide ethoxide, magnesium methoxide propoxide and magnesium ethoxide propoxide, of which magnesium dimethoxide, magnesium diethoxide and magnesium dipropoxide are preferable or magnesium diethoxide is more preferable. These magnesium compounds can be used either singly or as a combination of two kinds or more according to need. These magnesium compounds can be prepared by the reaction of metallic magnesium and an alcohol although commercially available products of the compounds can be used without further purification.

The use of the above described magnesium dialkoxide or dialkoxides is essential as the magnesium source in the preparation of the catalytic ingredient (A) of the catalyst system used in the inventive method. No uniform mixture can be obtained by use of a magnesium source material other than the dialkoxides, such as metallic magnesium and alkylmagnesium halides, with a tetrallkoxide of titanium or zirconium leading to a poor morphology of the resultant polymer product.

The tetraalkoxide of titanium or zirconium used in combination with the above described magnesium dialkoxide is represented by the general formula $M^1(OR^2)_4$, in which $M^1$ is an atom of titanium or zirconium and $R^2$ is a monovalent hydrocarbon group having 1 to 20 carbon atoms selected from the class consisting of alkyl groups, cycloalkyl groups, aryl groups and aralkyl groups. Examples of suitable titanium and zirconium tetraalkoxides include tetramethoxy titanium, tetraethoxy titanium, tetra(n-propoxy) titanium, tetra(n-butoxy) titanium, tetra(n-pentoxy) titanium, tetra(n-hexoxy) titanium, tetra(n-heptoxy) titanium, tetra(n-octoxy) titanium, tetracyclopentoxy titanium, tetracyclohexoxy titanium, tetracycloheptoxy titanium, tetracyclooctoxy titanium and tetraphenoxy titanium as well as zirconium compounds corresponding to the above named titanium compounds by replacing the titanium atom with a zirconium atom.

The above described titanium or zirconium tetraalkoxide cannot be replaced with other titanium or zirconium compounds such as titanium halides, alkoxytitanium halides, zirconium halides and alkoxyzirconium halides since these titanium or zirconium compounds are poorly compatible with the magnesium dialkoxide and only with difficulty give a uniform mixture.

The magnesium dialkoxide and the titanium or zirconium tetraalkoxide are mixed together at a temperature in the range from room temperature to 150°C into a uniform mixture in a molar ratio of 1 : 0.4 to 1 : 5 or, preferably, 1 : 0.5 to 1 : 2.

In the next place, the mixture of the magnesium dialkoxide and the titanium or zirconium tetraalkoxide is brought into contact with an alkanol represented by the general formula $R^3OH$, in which $R^3$ is an alkyl group having 1 to 5 carbon atoms. Isopropyl alcohol is particularly preferable as the alkanol. The amount of the alkanol is usually in the range from 1 to 100 moles or, preferably, from 2 to 50 moles per mole of the magnesium dialkoxide. When the mixture of the magnesium dialkoxide and titanium or zirconium tetraalkoxide is brought into contact with the alkanol, a solid complex is precipitated in the mixture, of which the main constituent is the magnesium dialkoxide containing titanium or zirconium. The thus obtained solid complex has a specific surface area of usually, at least 30 $m^2/g$ or, in most cases, 80 to 200 $m^2/g$, which is much larger than that of conventional magnesium dialkoxide available on the market.

The next step, i.e. step (b), of the process is a reaction of the above obtained magnesium-containing solid complex with a zirconium tetraalkoxide, zirconium tetrahalide, e.g., zirconium tetrachloride, tetrabromide and tetraiodide, or a combination thereof, when the tetraalkoxide used in step (a) is a titanium tetraalkoxide, or with a titanium tetraalkoxide, titanium tetrahalide, e.g., titanium tetrachloride, tetrabromide and tetraiodide, or a combination thereof, when the tetraalkoxide used in step (a) is a zirconium tetraalkoxide. Examples of the zirconium or titanium tetraalkoxide used in step (b) may be the same ones as named before as the examples of the tetraalkoxide used in step (a). The zirconium or titanium tetraalkoxide can be replaced with or may be combined with a zirconium or titanium tetrahalide, respectively.

The amount of the zirconium or titanium tetraalkoxide and/or tetrahalide to be reacted in step (b) with the magnesium-containing solid complex obtained in step (a) is usually in the range from 0.01 to 2 moles or, preferably, from 0.05 to 1 mole per mole of the magnesium content in the magnesium-containing solid complex.

It is optional according to need to undertake a halogenation treatment of the magnesium-containing solid complex prior to the reaction with the zirconium or titanium tetraalkoxide and/or tetrahalide. The halogenation treatment gives advantages to prevent formation of coarse agglomerates of the catalyst particles and to prevent adhesive deposition of the catalyst particles on to the walls of the reactor in which the catalyst is prepared. The

EP 0 294 168 B1

halogenation treatment or, typically, chlorination treatment of the solid complex can be performed by directly contacting the solid complex as such with a chlorinating agent at a temperature in the range from 0 to 100°C but the uniformity of the chlorination can be increased when the chlorination reaction is performed by dispersing the solid complex in a suitable inert solvent.

Suitable halogenating agents include elementary halogens, thionyl halides, silicon tetrahalides and anhydrous hydrogen halides, the halogen being chlorine, fluorine or bromine. The amount of the halogenating agent to be used should be sufficient to provide at least 0.1 mole or, preferably, from 0.2 to 100 moles of the halogen atoms per mole of the magnesium atoms contained in the magnesium-containing solid complex.

The reaction product obtained in step (b) should contain zirconium and titanium in a molar ratio Zr : Ti of 0.2 : 1 to 20 : 1 or, preferably, 0.5 : 1 to 10 : 1.

In step (c) of the process, the reaction product obtained in the above described step (b) is then reacted with an organoaluminum halide compound to give the catalytic ingredient (A) in the catalyst system used in the inventive method.

The organoaluminum halide used here is represented by the general formula $AlR^5_nX_{3-n}$, in which $R^5$ is an alkyl group having 1 to 20 carbon atoms, X is an atom of halogen, such as chlorine and bromine, and the subscript n is 1 or 2. Examples of suitable organoaluminum halide include dimethylaluminum monochloride and monobromide, diethylaluminum monochloride and monobromide, diisopropylaluminum monochloride and monobromide, diisobutylaluminum monochloride and monobromide, methylaluminum dichloride and dibromide, ethylaluminum dichloride and dibromide, isopropylaluminum dichloride and dibromide and isobutylaluminum dichloride and dibromide. These organoaluminum halides can be used either singly or as a combination of two kinds or more according to need.

The above mentioned reaction of the reaction product obtained in step (b) and the organoaluminum halide in step (c) has an effect to enhance the bonding strength between the titanium or zirconium compound and the magnesium-containing solid complex as a carrier thereof.

Although the solid product obtained in step (c) described above can be used as such as the catalytic ingredient (A) in the catalyst system used in the inventive method, it is optional that the solid product is again reacted with the titanium compound and/or zirconium compound followed by a second reaction with the organoaluminum halide.

The catalytic ingredient (A) obtained in the above described manner should contain from 0.1 to 100 moles or, preferably, from 0.5 to 40 moles of the organoaluminum halide per mole of the content of magnesium. The molar ratio of zirconium to titanium, Zr : Ti, in the catalytic ingredient (A) should be in the range from 0.5 : 1 to 20 : 1 or, preferably, from 1 : 1 to 10 : 1. When the Zr : Ti molar ratio is smaller than 0.5, the molecular weight distribution of the resultant ethylene-based polymer would be too narrow. When this molar ratio exceeds 20, on the other hand, the catalyst system with the catalytic ingredient (A) combined with the catalytic ingredient (B) would have a somewhat decreased catalytic activity.

The catalytic ingredient (A) described above is used in combination with an organoaluminum compound as the catalytic ingredient (B) to form the catalyst system used in the inventive method. Various kinds of organoaluminum compounds can be used as the catalytic ingredient (B) without particular limitations. A preferable class of the organoaluminum compound include those represented by the general formulas $R_3Al$, $R_2AlX$, $R_3Al_2X_2$ and $R_2AlOR'$, in which R and R' are each an alkyl group or aryl group having 1 to 8 carbon atoms and X is an atom of halogen such as chlorine and bromine.

Examples of suitable organoaluminum compounds include trimethyl aluminum, triethyl aluminum, triisopropyl aluminum, triisobutyl aluminum, diethyl aluminum monochloride, diisopropyl aluminum monochloride, diisobutyl aluminum monochloride, diethyl aluminum monomethoxide, dimethyl aluminum monoethoxide, diethyl aluminum monobutoxide, diethyl aluminum phenoxide, ethyl aluminum dichloride, isopropyl aluminum dichloride, methyl aluminum sesquichloride and ethyl aluminum sesquichloride, of which diethyl aluminum monochloride, triethyl aluminum and triisobutyl aluminum are preferred. These organoaluminum compounds can be used either singly or as a combination of two kinds or more according to need. Further, it is optional to use an alkyl-containing aluminoxane obtained by the reaction of an alkyl aluminum and water as the catalytic ingredient (B).

The amount of the catalytic ingredient (B) to be combined with the catalytic ingredient (A) is in the range from 1 to 1000 moles or, preferably, from 10 to 200 moles as aluminum per mole of the overall amount of titanium and zirconium in the catalytic ingredient (A).

When ethylene or a monomer mixture mainly composed of ethylene is polymerized according to the inventive method by use of the catalyst system prepared in the above described manner, the catalystic ingredients (A) and (B) are added to an inert solvent such as a hydrocabron solvent and the monomer or monomer mixture is introduced into the mixture kept at a temperature in the range from 20 to 200°C under a pressure in the range from 1 to 196 bar (1 to 200 kg/cm²). Bulk polymerization and gas-phase polymerisation can also be performed.

4

EP 0 294 168 B1

The polymerization reaction can be performed as a batch-wise process or as a continuous process.

The average molecular weight of the ethylene-based polymer as a product of the inventive method can be controlled by any conventional method including addition of hydrogen into the monomer or by means of control of the polymerization temperature and catalyst concentration as well as modification of the catalyst composition.

The above described inventive method is advantageous in several respects. For example, the catalyst system used in the inventive method is highly active so that a great cost saving can be obtained by omitting the expensive treatment of the polyethylene product for the removal of the catalyst residue. The catalyst system is highly durable so that polymer products having excellent morphology can be obtained. The products of ethylene-based polymer obtained by the inventive method have a relatively wide molecular weight distribution so that the polymer is suitable as a material for blow molding of hollow articles and inflation method for the manufacture of films.

In the following, the method of the invention is described in more detail by way of examples and comparative examples. The polymer products in the examples were evaluated in terms of the melt index $MI_{2.16}$ determined at 190°C under a load of 2.16 kg according to the procedure specified in JIS and of the flow ratio F.R. as a measure of the molecular weight distribution, which is a ratio of the melt index $MI_{21.6}$ determined at 190°C under a load of 21.6 kg to the $MI_{2.16}$.

### Example 1.

[1] Preparation of magnesium-containing solid complex

A mixture prepared by adding 10 g (88 m moles) of magnesium diethoxide $Mg(OC_2H_5)_2$ and 19 g (56 m moles) of titanium tetra(n-butoxide) $Ti(O-n-C_4H_9)_4$ into 100 ml of n-heptane was heated at 100°C for 3 hours so that the mixture was converted into a uniform solution. The solution was added dropwise to 120 ml of isopropyl alcohol kept at 20°C under agitation over a period of 1 hour followed by further continued agitation for additional 1 hour so that a solid material was precipitated in the mixture. The precipitates were washed repeatedly with anhydrous hexane until titanium could no longer be detected in the washings. The thus obtained magnesium-containing solid complex had a specific surface area of 130 m²/g and the content of titanium therein was 0.62% by weight.

[2] Preparation of solid catalytic ingredient

A solution of 4.5 g (12 m moles) of zirconium tetra(n-butoxide) $Zr(O-n-C_4H_9)_4$ and 2.0 g (6 m moles) of titanium tetra(n-butoxide) $Ti(O-n-C_4H_9)_4$ dissolved in 50 ml of hexane was added dropwise into the slurry of the magnesium-containing solid complex obtained in [1] above kept at 20°C with agitation over a period of 15 minutes and the mixture was then heated under reflux for 90 minutes to effect the reaction. Thereafter, 102 ml of a 50% by weight hexane solution of ethyl aluminum dichloride $C_2H_5AlCl_2$ were added dropwise into the mixture kept at 20°C under agitation over a period of 30 minutes followed by heating under reflux for 60 minutes to effect the reaction. The solid material in the mixture was washed repeatedly with anhydrous hexane until chlorine could no longer be detected in the washings and then hexane was added to the mixture to make up an overall volume of 500 ml. The contents of titanium and zirconium in the thus prepared solid material were 1.76% by weight and 6.10% by weight, respectively.

[3] Polymerization of ethylene

An autoclave of 1 liter capacity equipped with a stirrer was charged with 400 ml of hexane and heated at 80°C. After thoroughly replacing the atmospheric gas inside the autoclave with hydrogen, hydrogen was compressed into the autoclave up to a pressure 1.9 bar G of (1.9 kg/cm²G) and then ethylene was introduced thereinto up to a total pressure of 4.3 bar G (4.4 kg/cm²G). Thereafter, a portion of the solid catalytic ingredient prepared in [2] above corresponding to a titanium content of 0.0040 m mole as the catalytic ingredient (A) and 1.50 m moles of triisobutyl aluminum as the catalytic ingredient (B) were introduced into the autoclave and the polymerization of ethylene was conducted for 1 hour while the pressure in the autoclave was maintained at 4.4 kg/cm²G by continuously supplying ethylene.

The table below gives the contents of titanium and zirconium in the catalytic ingredient (A) prepared in step [2], the partial pressures of ethylene and hydrogen in step [3], the activity of the catalyst system as expressed by the yield of polyethylene obtained by the polymerization reaction for 1 hour per gram of the titanium and zirconium in the catalyst system and the $MI_{2.16}$ and F.R. for the characterization of the polyethylene product.

5

Example 2.

The experimental procedure was substantially the same as in Example 1 except that the amount of the titanium tetra(n-butoxide) used in step [2] was decreased to 2 m moles instead of 6 m moles. Relevant data are shown in the table.

Example 3.

The experimental procedure was substantially the same as in Example 1 except that the titanium tetra(n-butoxide) used in step [2] of Example 1 was omitted. Relevant data are shown in the table.

Example 4.

The experimental procedure was substantially the same as in Example 1 except that 56 m moles of the titanium tetra(n-butoxide) used in step [1] of Example 1 were replaced with 56 m moles of zirconium tetra(n-butoxide) and the zirconium tetra(n-butoxide) used in step [2] was omitted. Relevant data are shown in the table.

Example 5.

[1] Preparation of magnesium-containing solid complex

The procedure was the same as in step [1] of Example 1.

[2] Preparation of solid catalytic ingredient

A solution prepared by dissolving 4.5 g (12 m moles) of zirconium tetra(n-butoxide) in 50 ml of hexane was added dropwise into the slurry of the magnesium-containing solid complex kept at 20°C with agitation over a period of 15 minutes followed by heating of the mixture under reflux for 90 minutes to effect the reaction. Thereafter, 102 ml of a 50% by weight hexane solution of ethyl aluminum dichloride $C_2H_5AlCl_2$ were added dropwise into the mixture kept at 20°C under agitation over a period of 30 minutes followed by heating of the mixture under reflux for 60 minutes to effect the reaction. The solid material in the mixture was washed repeatedly with anhydrous hexane until chlorine could no longer be detected in the washings and then hexane was added to the mixture to make up an overall volume of 500 ml. Then, a solution of 2.0 g (6 m moles) of titanium tetra(n-butoxide) dissolved in 50 ml of hexane was added dropwise into the mixture kept at 20°C over a period of 15 minutes followed by further continued agitation for additional 1 hour.

Further, another 102 ml portion of a 50% by weight hexane solution of ethyl aluminum dichloride $C_2H_5AlCl_2$ was added dropwise into the mixture kept at 20°C under agitation over a period of 30 minutes followed by heating of the mixture under reflux for 60 minutes to effect the reaction. The solid material in the mixture was washed repeatedly with anhydrous hexane until chlorine could no longer be detected in the washings. The thus obtained solid material was used as the catalytic ingredient (A).

[3] Polymerization of ethylene

The polymerization was conducted in substantially the same manner as in step [3] of Example 1 excepting the use of the solid material obtained in [2] above as the catalytic ingredient (A). Relevant data are shown in the table.

Example 6.

The experimental procedure was substantially the same as in Example 5 excepting replacement of 2.0 g (6 m moles) of titanium tetra(n-butoxide) used in step [2] of Example 5 with 0.67 ml (6 m moles) of titanium tetrachloride. Relevant data are shown in the table.

Example 7.

The experimental procedure was substantially the same as in Example 1 except that the amount of the aluminum triisobutoxide used in step [3] was decreased to 0.24 m mole and the partial pressures of ethylene

6

and hydrogen were 2.5 bar (2.5 kg/cm²) and 2.9 bar (3.0 kg/cm²), respectively. Relevant data are shown in the table.

### Example 8.

The experimental procedure was substantially the same as in Example 7 except that 0.24 m mole of aluminum triisobutoxide was replaced with a combination of 0.12 m mole of aluminum triisobutoxide and 0.12 m mole of diethyl aluminum monochloride. Relevant data are shown in the table.

### Comparative Example 1.

[1] Preparation of magnesium-containing carrier

A mixture prepared by adding 3.7 g (22 m moles) of silicon tetrachloride to a dispersion of 10 g of magnesium diethoxide in 200 ml of hexane was agitated at 20°C and 1.5 g (33 m moles) of ethyl alcohol were added thereto dropwise over a period of 1 hour followed by heating of the mixture under reflux for 2 hours to effect the reaction. The magnesium-containing solid material produced in the mixture was washed repeatedly with anhydrous hexane until ethyl alcohol could no longer be detected in the washings followed by the addition of hexane to make up an overall volume of 500 ml.

[2] & [3] Preparation of catalyst and polymerization of ethylene

The procedures subsequent to step [1] above were substantially the same as in [2] and [3] of Example 1 excepting the use of the magnesium-containing carrier obtained in step [1] above in place of the magnesium-containing solid complex prepared in step [1] of Example 1. Relevant data are shown in the table.

### Comparative Example 2.

The experimental procedure was substantially the same as in Comparative Example 1 excepting omission of the chlorination reaction by adding silicon tetrachloride in the preparation of the magnesium-containing carrier. Relevant data are shown in the table.

### Comparative Example 3.

A slurry of the magnesium-containing solid material obtained in the same procedure as in step [1] of Example 1 was admixed with 4.9 ml of silicon tetraethoxide and 25 ml of titanium tetrachloride and the mixture was heated under reflux for 60 minutes to effect the reaction. The solid material in the mixture was washed repeatedly with hexane until chlorine could no longer be detected in the washings.

Excepting the use of the thus obtained solid material as the solid catalytic ingredient (A), polymerization of ethylene was performed in substantially the same manner as in step [3] of Example 1. Relevant data are shown in the table.

### Examples 9 to 16.

The experimental procedure in each of these Examples 9 to 16 was substantially the same as the procedure in one of Examples 1 to 8, respectively, except that the magnesium-containing solid complex obtained in step [1] of the preceding examples was subjected to a chlorination reaction in the following manner prior to the reaction in step [2].

Thus, the magnesium-containing solid complex obtained in step [1] was admixed with hexane to make up a volume of 500 ml and the mixture was admixed with 3.7 g (22 m moles) of silicon tetrachloride followed by dropwise addition of 1.5 g (33 m moles) of ethyl alcohol at 20°C with agitation over a period of 1 hour and heating under reflux for 2 hours to effect the reaction. The thus obtained magnesium-containing solid material was washed repeatedly with anhydrous hexane until ethyl alcohol could no longer be detected in the washings. Relevant data are shown in the table.

### Example 17.

The experimental procedure was substantially the same as in Example 1 except that 0.3 g of butene-1 was added to the autoclave as a comonomer to be copolymerized with ethylene and the autoclave was first pressurized with hydrogen up to a pressure of 1.9 bar G (1.9 kg/cm²G) and then with ethylene up to a pressure of 4.3 bar G (4.4 kg/cm²G). Relevant data are shown in the table.

T a b l e

| | | Content of transition metal in first catalytic ingredient, % by weight | | Partial pressure, kg/cm² = 0.98 bar | | Catalytic activity, kg-polymer/g-(Ti+Zr)/hour | MI$_{2.16}$, g/10 minutes | F.R. |
|---|---|---|---|---|---|---|---|---|
| | | titanium | zirconium | ethylene | hydrogen | | | |
| Example | 1 | 1.76 | 6.10 | 2.5 | 1.5 | 102 | 0.21 | 53 |
| | 2 | 0.72 | 6.17 | 2.5 | 1.5 | 70 | 0.12 | 57 |
| | 3 | 0.66 | 6.15 | 2.5 | 1.5 | 63 | 0.10 | 57 |
| | 4 | 1.52 | 1.27 | 2.5 | 1.5 | 270 | 1.03 | 40 |
| | 5 | 1.74 | 6.12 | 2.5 | 1.5 | 96 | 0.20 | 52 |
| | 6 | 0.95 | 6.15 | 2.5 | 1.5 | 72 | 0.11 | 55 |
| | 7 | 1.76 | 6.10 | 2.5 | 3.0 | 97 | 0.40 | 70 |
| | 8 | 1.76 | 6.10 | 2.5 | 3.0 | 80 | 0.38 | 69 |
| | 9 | 1.54 | 6.12 | 2.5 | 1.5 | 96 | 0.12 | 55 |
| | 10 | 0.52 | 6.20 | 2.5 | 1.5 | 69 | 0.11 | 59 |
| | 11 | 0.12 | 6.15 | 2.5 | 1.5 | 59 | 0.09 | 60 |
| | 12 | 1.58 | 1.02 | 2.5 | 1.5 | 303 | 1.42 | 37 |
| | 13 | 1.52 | 6.10 | 2.5 | 1.5 | 90 | 0.14 | 54 |
| | 14 | 0.33 | 6.17 | 2.5 | 1.5 | 59 | 0.11 | 56 |
| | 15 | 1.54 | 6.12 | 2.5 | 3.0 | 92 | 0.36 | 73 |
| | 16 | 1.54 | 6.12 | 2.5 | 3.0 | 76 | 0.33 | 73 |
| | 17 | 1.54 | 6.12 | 2.5 | 1.5 | 80 | 0.24 | 62 |
| Comparative Example | 1 | 1.40 | 6.05 | 2.5 | 1.5 | 30 | 0.11 | 50 |
| | 2 | 1.54 | 6.12 | 2.5 | 1.5 | 32 | 0.15 | 48 |
| | 3 | 5.20 | 0 | 2.5 | 1.5 | 262 | 1.42 | 27 |

## Claims

1. A method for producing an ethylene-based polymer which comprises polymerizing ethylene or a monomer mixture mainly composed of ethylene in the presence of a catalyst system comprising :

(A) a first catalytic ingredient which is a solid prepared in a process comprising the steps of

(a) contacting a mixture composed of a magnesium dialkoxide represented by the general formula $Mg(OR^1)_2$, in which $R^1$ is a monovalent hydrocarbon group, and a tetraalkoxide of a metal represented by the general formula $M^1(OR^2)_4$, in which $M^1$ is an atom of titanium or zirconium and $R^2$ is a monovalent hydrocarbon group, with an alkanol represented by the general formula $R^3OH$, in which $R^3$ is an alkyl group, to form a magnesium-containing solid complex,

(b) reacting the magnesium-containing solid complex with a tetraalkoxide of a metal represented by the general formula $M^2(OR^4)_4$, tetrahalide of a metal represented by the general formula $M^2X^1_4$ or a mixture thereof, in which $M^2$ is an atom of zirconium, when $M^1$ is a titanium atom, or an atom of titanium, when $M^1$ is a zirconium atom, $R^4$ is a monovalent hydrocarbon group and $X^1$ is a halogen atom, and optionally with an alkoxide of the formula $M^1(OR^2)_4$ when $M^1$ is a titanium atom, and

(c) reacting the reaction product obtained in step (b) above with an alkylaluminium halide represented by the general formula $AlR^5X_{3-n}$, in which $R^5$ is an alkyl group having 1 to 20 carbon atoms, $X^2$ is a halogen atom and n is 1 or 2 ; and

(B) an organoaluminium compound as the second catalytic ingredient.

2. The method for producing an ethylene-based polymer as claimed in claim 1 wherein the monovalent hydrocarbon group denoted by $R^1$ is selected from the class consisting of aliphatic, alicyclic and aromatic hydrocarbon groups having 1 to 8 carbon atoms.

3. The method for producing an ethylene-based polymer as claimed in claim 1 wherein the monovalent hydrocarbon group denoted by $R^2$ is selected from the class consisting of alkyl groups, cycloalkyl groups, aryl groups and aralkyl groups having 1 to 20 carbon atoms.

4. The method for producing an ethylene-based polymer as claimed in claim 1 wherein the molar proportion of the magnesium dialkoxide to the tetraalkoxide of a metal in step (a) is in the range from 1 : 0.4 to 1 : 5.

5. The method for producing an ethylene-based polymer as claimed in claim 1 wherein the alkyl group denoted by $R^3$ has 1 to 5 carbon atoms.

6. The method for producing an ethylene-based polymer as claimed in claim 5 wherein the alkyl group denoted by $R^3$ is an isopropyl group.

7. The method for producing an ethylene-based polymer as claimed in claim 1 wherein the amount of the alkanol in step (a) is in the range from 1 to 100 moles per mole of the magnesium dialkoxide.

8. The method for producing an ethylene-based polymer as claimed in claim 1 wherein the monovalent hydrocarbon group denoted by $R^4$ is selected from the class consisting of alkyl groups, cycloalkyl groups, aryl groups and aralkyl groups having 1 to 20 carbon atoms.

9. The method for producing an ethylene-based polymer as claimed in claim 1 wherein the amount of the tetraalkoxide of a metal represented by the general formula $M^2(OR^4)_4$ is in the range from 0.01 to 2 moles per mole of magnesium in the magnesium-containing solid complex.

10. The method for producing an ethylene-based polymer as claimed in claim 1 wherein the organoaluminum compound as the second catalytic ingredient is elected from the class consisting of the compounds represented by the general formulas $R_3Al$, $R_2AlX$, $R_3Al_2X_2$ and $R_2AlOR'$, in which R and R' are each an alkyl group or an aryl group having 1 to 8 carbon atoms and X is a halogen atom.

11. The method for producing an ethylene-based polymer as claimed in claim 10 wherein the organoaluminum compound as the second catalytic ingredient is selected from the class consisting of diethyl aluminum monochloride, triethyl aluminum and triisobutyl aluminum.

12. The method for producing an ethylene-based polymer as claimed in claim 1 wherein the amount of the organoaluminum compound as the second catalytic ingredient is in the range from 1 to 1000 moles per mole of the total amount of titanium and zirconium in the first catalytic ingredient.

## Patentansprüche

1. Verfahren zur Herstellung von Polymeren auf Ethylenbasis durch Polymerisation von Ethylen oder einer Monomermischung, die hauptsächlich aus Ethylen besteht, in Gegenwart eines Katalysatorsystems, das umfaßt :

(A) eine erste Katalysatorkomponente, die einen Feststoff darstellt, der nach einem Verfahren hergestellt wird, das folgende Schritte umfaßt :

(a) Inkontaktbringen einer Mischung aus einem Magnesiumdialkoxid, der allgemeinen Formel $Mg(OR^1)_2$, in der $R^1$ eine einwertige Kohlenwasserstoffgruppe bedeutet, und einem Metall-tetralkoxid der allgemeinen Formel $M^1(OR^2)_4$, in der $M^1$ ein Titan- oder Zirkoniumatom und $R^2$ eine einwertige Kohlenwasserstoffgruppe bedeuten, mit einem Alkanol der allgemeinen Formel $R^3OH$, worin $R^3$ eine Alkylgruppe bedeutet, unter Bildung eines Magnesium enthaltenden festen Komplexes,

(b) Umsetzung des Magnesium enthaltenden festen Komplexes mit einem Metall-tetralkoxid der allgemeinen Formel $M^2(OR^4)_4$, einem Metall-tetrahalogenid der allgemeinen Formel $M^2X^1_4$ oder einer Mischung von beiden, wobei bedeuten : $M^2$ ein Zirkoniumatom, wenn $M^1$ ein Titanatom ist, oder ein Titanatom, wenn $M^1$ ein Zirkoniumatom ist, $R^4$ eine einwertige Kohlenwasserstoffgruppe und $X^1$ ein Halogenatom, sowie gegebenenfalls mit einem Alkoxid der Formel $M^1(OR^2)_4$, wenn $M^1$ ein Titanatom ist, und

(c) Umsetzung des im obigen Schritt (b) erhaltenen Reaktionsprodukts mit einem Alkylaluminiumhalogenid der allgemeinen Formel $AlR^5X^2_{3-n}$, worin $R^5$ eine Alkylgruppe mit 1 bis 20 Kohlenstoffatomen, $X^2$ ein Halogenatom und n 1 oder 2 bedeuten,

und

(B) eine Organoaluminiumverbindung als zweite Katalysatorkomponente.

2. Verfahren zur Herstellung von Polymeren auf Ethylenbasis nach Anspruch 1, wobei die einwertige Kohlenwasserstoffgruppe $R^1$ unter aliphatischen, alicyclischen und aromatischen Kohlenwasserstoffgruppen mit 1 bis 8 Kohlenstoffatomen ausgewählt wird.

3. Verfahren zur Herstellung von Polymeren auf Ethylenbasis nach Anspruch 1, wobei die einwertige Kohlenwasserstoffgruppe $R^2$ unter Alkylgruppen, Cycloalkylgruppen, Arylgruppen und Aralkylgruppen mit 1 bis 20 Kohlenstoffatomen ausgewählt wird.

4. Verfahren zur Herstellung von Polymeren auf Ethylenbasis nach Anspruch 1, wobei das Molverhältnis von Magnesiumdialkoxid zu Metall-tetralkoxid in Schritt (a) im Bereich von 1 : 0,4 bis 1 : 5 liegt.

5. Verfahren zur Herstellung von Polymeren auf Ethylenbasis nach Anspruch 1, wobei die Alkylgruppe $R^3$ 1 bis 5 Kohlenstoffatome aufweist.

6. Verfahren zur Herstellung von Polymeren auf Ethylenbasis nach Anspruch 5, wobei die Alkylgruppe $R^3$ eine Isopropylgruppe ist.

7. Verfahren zur Herstellung von Polymeren auf Ethylenbasis nach Anspruch 1, wobei die Menge des Alkanols in Schritt (a) im Bereich von 1 bis 100 mol pro Mol Magnesiumdialkoxid liegt.

8. Verfahren zur Herstellung von Polymeren auf Ethylenbasis nach Anspruch 1, wobei die einwertige Kohlenwasserstoffgruppe $R^4$ unter Alkylgruppen, Cycloalkylgruppen, Arylgruppen und Aralkylgruppen mit 1 bis 20 Kohlenstoffatomen ausgewählt wird.

9. Verfahren zur Herstellung von Polymeren auf Ethylenbasis nach Anspruch 1, wobei die Menge des Metalltetralkoxids der allgemeinen Formel $M^2(OR^4)_4$ im Bereich von 0,01 bis 2 mol pro Mol Magnesium in dem Magnesium enthaltenden festen Komplex liegt.

10. Verfahren zur Herstellung von Polymeren auf Ethylenbasis nach Anspruch 1, wobei die Organoaluminiumverbindung als zweite Katalysatorkomponente unter den Verbindungen der allgemeinen Formeln $R_3Al$, $R_2AlX$, $R_3Al_2X_2$ und $R_2AlOR'$ ausgewählt wird, worin R und R' jeweils eine Alkylgruppe oder eine Arylgruppe mit 1 bis 8 Kohlenstoffatomen und X ein Halogenatom bedeuten.

11. Verfahren zur Herstellung von Polymeren auf Ethylenbasis nach Anspruch 10, wobei die Organoaluminiumverbindung als zweite Katalysatorkomponente unter Diethylaluminiummonochlorid, Triethylaluminium und Triisobutylaluminium ausgewählt wird.

12. Verfahren zur Herstellung von Polymeren auf Ethylenbasis nach Anspruch 1, wobei die Menge der Organoaluminiumverbindung als zweite Katalysatorkomponente im Bereich von 1 bis 1000 mol pro Mol der Gesamtmenge an Titan und Zirkonium in der ersten Katalysatorkomponente liegt.


**Revendications**

1. Procédé de préparation d'un polymère à base d'éthylène, qui comprend la polymérisation d'éthylène ou d'un mélange de monomères, composé principalement d'éthylène, en présence d'un système catalytique comprenant :

(A) un premier ingrédient catalytique qui est une matière solide préparée par un procédé comprenant les phases suivantes :

(a) la mise en contact d'un mélange composé d'un dialcoolate de magnésium représenté par la formule générale $Mg(OR^1)_2$, dans laquelle $R^1$ est un groupe hydrocarboné monovalent, et d'un tétra-alcoolate d'un métal, représenté par la formule générale $M^1(OR^2)_4$, dans laquelle $M^1$ est un atome de titane ou de zirco-

nium et $R^2$ est un groupe hydrocarboné monovalent, avec un alcanol représenté par la formule générale $R^3OH$, dans laquelle $R^3$ est un groupe alkyle pour former un complexe solide contenant du magnesium,

(b) la réaction du complexe solide contenant du magnésium avec un tétra-alcoolate d'un métal, représenté par la formule générale $M^2(OR^4)_4$, un tétrahalogénure d'un métal, représenté par la formule générale $M^2X^1_4$ ou un mélange d'un tel tétra-alcoolate et d'un tel tétrahalogénure, formules dans lesquelles $M^2$ est un atome de zirconium lorsque $M^1$ est un atome de titane, ou un atome de titane lorsque $M^1$ est un atome de zirconium, $R^4$ est un groupe hydrocarboné monovolent et $X^1$ est un atome d'halogène, et facultativement avec un alcoolate de la formule $M^1(OR^2)_4$ lorsque $M^1$ est un atome de titane et,

(c) la réaction du produit de réaction obtenu suivant la phase (b) précitée avec un halogénure d'alkyl aluminium représenté par la formule générale $AlR^5X_{3-n}$, dans laquelle $R^5$ est un groupe alkyle de 1 à 20 atomes de carbone, $X^2$ est un atome d'halogène et n a une valeur de 1 ou 2,
et

(B) un composé organique d'aluminium à titre de second ingrédient catalytique.

2. Procédé de préparation d'un polymère à base d'éthylène suivant la revendication 1, caractérisé en ce que le groupe hydrocarboné monovalent désigné par $R^1$ est choisi dans la classe comprenant les groupes hydrocarbonés aliphatiques, alicycliques et aromatiques, comportant 1 à 8 atomes de carbone.

3. Procédé de préparation d'un polymère à base d'éthylène suivant la revendication 1, caractérisé en ce que le groupe hydrocarboné monovolent désigné par $R^2$ est choisi dans la classe comprenant les groupes alkyle, les groupes cycloalkyle, les groupes aryle et les groupes aralkyle, comportant 1 à 20 atomes de carbone.

4. Procédé de préparation d'un polymère à base d'éthylène suivant la revendication 1, caractérisé en ce que la proportion molaire entre le dialcoolate de magnésium et le tétra-alcoolate d'un métal dans la phase (a) est de l'ordre de 1/0,4 à 1/5.

5. Procédé de préparation d'un polymère à base d'éthylène suivant la revendication 1, caractérisé en ce que le groupe alkyle désigné par $R^3$ comporte 1 à 5 atomes de carbone.

6. Procédé de préparation d'un polymère à base d'éthylène suivant la revendication 5, caractérisé en ce que le groupe alkyle désigné par $R^3$ est un groupe isopropyle.

7. Procédé de préparation d'un polymère à base d'éthylène suivant la revendication 1, caractérisé en ce que la quantité de l'alcanol dans la phase (a) est de l'ordre de 1 à 100 moles par mole du dialcoolate de magnésium.

8. Procédé de préparation d'un polymère à base d'éthylène suivant la revendication 1, caractérisé en ce que le groupe hydrocarboné monovalent désigné par $R^4$ est choisi dans la classe comprenant les groupes alkyle, les groupes cycloalkyle, les groupes aryle et les groupes aralkyle comportant 1 à 20 atomes de carbone.

9. Procédé de préparation d'un polymère à base d'éthylène suivant la revendication 1, caractérisé en ce que la quantité du tétra-alcoolate d'un métal, représenté par la formule générale $M^2(OR^4)_4$ est de l'ordre de 0,01 à 2 moles par mole de magnésium dans le complexe solide contenant du magnésium.

10. Procédé de préparation d'un polymère à base de d'éthylène suivant la revendication 1, caractérisé en ce que le composé organique d'aluminium utilisé à titre de second ingrédient catalytique est choisi dans la classe comprenant les composés représentés par les formules générales $R_3Al$, $R_2AlX$, $R_3Al_2X_2$ et $R_2AlOR'$, dans lesquelles R et R' représentent chacun un groupe alkyle ou un groupe aryle de 1 à 8 atomes de carbone, et X représente un atome d'halogène.

11. Procédé de préparation d'un polymère à base d'éthylène suivant la revendication 10, caractérisé en ce que le composé organique d'aluminium utilisé à titre de second ingrédient catalytique est choisi dans la classe comprenant le monochlorure de diéthyl aluminium, le triéthyl aluminium et le triisobutyl aluminium.

12. Procédé de préparation d'un polymère à base d'éthylène suivant la revendication 1, caractérisé en ce que la quantité du composé organique d'aluminium utilisé à titre de second ingrédient catalytique est de l'ordre de 1 à 1000 moles par mole de la quantité totale de titane et de zirconium se trouvant dans le premier ingrédient catalytique.